# EUROPEAN PATENT SPECIFICATION

(11) **EP 3 356 761 B1**
(45) Date of publication and mention of the grant of the patent: **17.07.2019**
(21) Application number: 16797985.5
(22) Date of filing: 30.09.2016
(51) Int. Cl.: G01B 5/00, G01B 11/24

(54) **APPARATUS FOR READING AND IDENTIFYING THE PROFILE OF A KEY**
VORRICHTUNG ZUM LESEN UND IDENTIFIZIEREN DES PROFILS EINES SCHLÜSSELS
APPAREIL POUR LIRE ET IDENTIFIER LE PROFIL D'UNE CLÉ

(30) Priority: 30.09.2015 IT UB20154051
(43) Date of publication of application: 08.08.2018
(73) Proprietor: Keyline S.P.A., 31015 Conegliano (TV) (IT)
(72) Inventor: BIANCHI, Massimo, 31012 Cappella Maggiore (IT); REBULI, David, 35010 Trebaseleghe (IT); GIOMO, Stefano, 31100 Treviso (IT)
(74) Representative: De Bortoli, Tiziano
(86) International application number: PCT/IB2016/055871
(87) International publication number: WO 2017/056054

(56) References cited:
- WO-A1-89/12867
- WO-A1-2008/071619
- DE-A1- 3 134 748
- DE-A1-102005 027 102
- US-B1- 6 175 638

## Description

### FIELD OF THE INVENTION

The present invention falls within the scope of devices intended to facilitate the operations of duplicating a key, for example for locks or motor vehicles. Namely, the present invention relates to an apparatus for reading the profile of a key and for subsequently identifying the reference code assigned to the key itself.

### BACKGROUND ART

Keys for locks and cylinders typically comprise a head portion and a shank portion. The latter has grooves which substantially define a profile compatible with the lock/cylinder associated with the key. The shank portion normally comprises a series of notches/indentations defined on at least one side of such shank portion. As a whole, the shape of the notches defines the encryption or code of the key.

As is known, the duplication of a key is achieved by means of duplicating machines which replicate the encryption on a key blank. Such machines generally comprise a tool controlled by a device through which the encryption of the key to be duplicated is mechanically and/or optically read.

Duplicating a key always requires a preliminary step consisting in identifying the characteristic profile of the shank portion of the key to be duplicated. Such an identification is necessary in order to correctly select the key blank on which the encryption is to be replicated. In fact, the key blank should have the same profile as the key to be duplicated and a compatible length.

For this purpose, devices have been proposed over the last few years, which allow to identify the profile of the key to be duplicated. Namely, such devices capture at least one image of the profile of the shank of the key to be duplicated, and by means of suitable software, compare such an image with those saved in a database. At the end of such a comparison, the device provides an identification code of the key blank.

An example of such devices is disclosed in the patent application WO 2008/071619. In particular, such a device comprises a casing in which a resting plate for a key is placed. The latter is introduced through a slot delimited by two bars of LEDs, an upper one and a lower one, with which a blocking device is associated. Such a blocking device serves the specific function of blocking the key at the head without intervening on the shank portion. The device comprises a further bar of LEDs, which serve the function of illuminating the whole thickness of the plate. The device at issue further comprises a plurality of mirrors arranged so as to reflect the image of the key illuminated up to a lens, behind which an optical sensor is arranged.

Due to the position thereof, the bars of LEDs create a zone of scattered light and namely, a light background against which the dark profile of the key appears. For this purpose, the parts forming the blocking device are made of a translucent material such as to allow the light to pass through the parts themselves in a scattered manner. The dark image of the key against a light background is therefore collected by a first mirror and reaches the lens and therefore the optical sensor through a series of reflections onto other mirrors. The image is displayed on a screen, through the optical sensor. The device is provided with a processing unit which processes the image, through a suitable software, to improve the sharpness thereof. Then, the processing unit makes a comparison between the image captured and those stored in a database. Each of these images stored is associated with an identification code of a "key blank" available to the operator. Following the comparison, the processing unit displays the identification code of the key blank, the profile of which corresponds to that of the key to be duplicated.

It has been shown that the device described in application WO 2008/071619 has various drawbacks, the first of which being precisely the need to block the key in backlit illumination, i.e. the complexity of blocking the key while generating and maintaining a *"light background''.* For this purpose, the parts of the blocking device are made of a translucent material, such as for example Plexiglas or silicone. In addition to affecting production costs, the use of a translucent material is a critical aspect even in terms of duration since it is easily subjected to dirt and wear. It has also been shown that the principle of illumination implemented in the device described in the application WO 2008/071619 may cause reflection problems when the terminal part (or tip) of the shank portion is "rounded" or "chamfered", this meaning any shape of the end of the shank so that the shank itself is thinned down with respect to the rest of the key shank. Such a thinning down can be obtained through various operations known to a person skilled in the art. It has been shown that in the device of WO 2008/071619, the quality of the image captured by the optical device disadvantageously decreases in the presence of a rounded/chamfered end.

Another drawback of the solution described in WO 2008/071619 is in the structure of the device, which appears particularly complex both in terms of the assembly thereof and in terms of the inspection and maintenance operations which are particularly laborious and complex. Another further disadvantage is apparent in the principle of insertion of the key, even partially caused by the complexity of the structure of the blocking device. Namely, the device at issue requires the operator to always use two hands, one for spacing apart the blocking bars by means of a suitable lever and the other for inserting the key.

US 6,175,638 B1 discloses an apparatus for reading and identifying a key comprising a chamber provided with an inlet section of the key and a fixing device of the key. The apparatus further comprises, inside the chamber, a light dissipating member, light emitting elements and a screen. Once the key has been positioned inside the chamber, the shank portion is illuminated by the light dissipating member, which dissipates, disperses, scatters the light from the light emitting elements along a portion of the grooves and indentations of the shank so as to form a shadow on the screen.

DE 31 34 748 A1 discloses a device for reading and identifying a key comprising optical means, which include lighting means and a translucent screen. The lighting means are arranged at the stop of the key and illuminate it so as to generate an image of the profile of the key on the screen, which appears black against a white background.

In the above-mentioned documents US 6,175,638 B1 and DE 31 34 748 A1, the lighting means of the key work in backlit illumination, whereby a dark image of the shank is formed against a light background.

WO 89/12867 A1 discloses a system of reading and identifying a key comprising a key holder configured to position the key horizontally along its longitudinal axis with the key flat sides arranged in a vertical plane, and a lighting subsystem configured to illuminate the key and form an image of the front profile of the key. The lighting subsystem comprises two or more incandescent lamps, which illuminate the front portion of the key with the interposition of a focusing screen between the incandescent lamps and the tip of the key.

DE 10 2005 027102 A1 discloses a method and an apparatus for identifying the geometrical configuration of a key. The apparatus comprises a photocopier adapted to illuminate the key at the front and to generate a series of photographs of the key so as to generate a three-dimensional view of the key.

In the above-mentioned documents WO 89/12867 A1 and DE 10 2005 027102 A1, the key is illuminated only at the front, with subsequent difficulty in reading the part of shank furthest from the tip and poor quality of the image generated.

In view of the above considerations, it is the main task of the present invention to provide an apparatus for reading the profile of a key to be duplicated which allows to overcome the above-described drawbacks. Within the scope of this task, a first object of the present invention is to provide an apparatus which is highly versatile in terms of operation, i.e. which allows to read the profile of various types of keys. It is another object of the present invention to provide an apparatus which allows a reliable identification of the profile of a key, without a complex optical system. It is a further object to provide an apparatus, the operating principle and structure of which do not require frequent inspection and/or maintenance operations, meanwhile facilitating such operations when required. Not last object of the present invention is to provide an apparatus which is reliable and easy to make at competitive costs.

### SUMMARY

The present invention comprises an apparatus according to claim 1 for reading the profile of a shank portion of a key, in which said shank portion comprises at least one terminal part. Such an apparatus is characterized in that it comprises a chamber provided with an inlet section for inserting at least one segment of said shank portion. The apparatus further comprises an optical device operatively associated with the chamber, which defines an optical axis. Such an optical device is configured to capture an image comprising at least one view of the profile of the shank. The apparatus according to the invention further comprises a support device which defines a bearing plane for at least one segment of said key. The optical axis indicated above is parallel to such a bearing plane. The apparatus according to the invention is further characterized in that it comprises a lighting device operatively associated with the chamber and configured to illuminate at least one of said terminal parts of the key shank.

Contrary to what occurs in the above-described traditional devices, the lighting device does not serve to define a light background, but contrarily is configured to scatter light onto a part of the key shank. In this manner, direct illumination, and not backlit illumination, is achieved of the part of the key shank and the optical device captures an image containing at least one view of the profile which appears light/illuminated against a dark background. Advantageously, this solution allows simplifying the structure of the other parts such as for example, the support device which may be advantageously made of a wear-resistant metal material. Simultaneously, the apparatus according to the invention allows a high quality image to be captured even if the shank of the key being examined has a rounded/chamfered terminal part.

### LIST OF DRAWINGS

Further features and advantages of the present invention will become more apparent from the following detailed description, provided by way of non-limiting example and shown in the accompanying drawings, in which:
- Figure 1 is an image comprising a view of a first key and a view of the profile of the key itself which may be read and identified through an apparatus according to the present invention;
- Figure 1A is a view of a key blank having the same profile as the key in Figure 1, and length compatible with it;
- Figures 2 to 6 are images of certain types of keys, the profile of which may be read and identified through an apparatus according to the present invention;
- Figures 7 and 8 are diagrammatic cross-section views of a device according to the present invention;
- Figure 9 is a diagrammatic view of a group of components of an apparatus according to the invention;
- Figure 10 shows an example of image which can be captured by an optical device of an apparatus according to the invention;
- Figures 11 and 12 are a first view and a second view, respectively, of a possible embodiment of an apparatus according to the invention;
- Figure 13 is a perspective view of a first group of components of the apparatus shown in Figures 11 and 12;
- Figure 14 is an exploded view of a second group of components of the apparatus shown in Figures 11 and 12.

### DETAILED DESCRIPTION

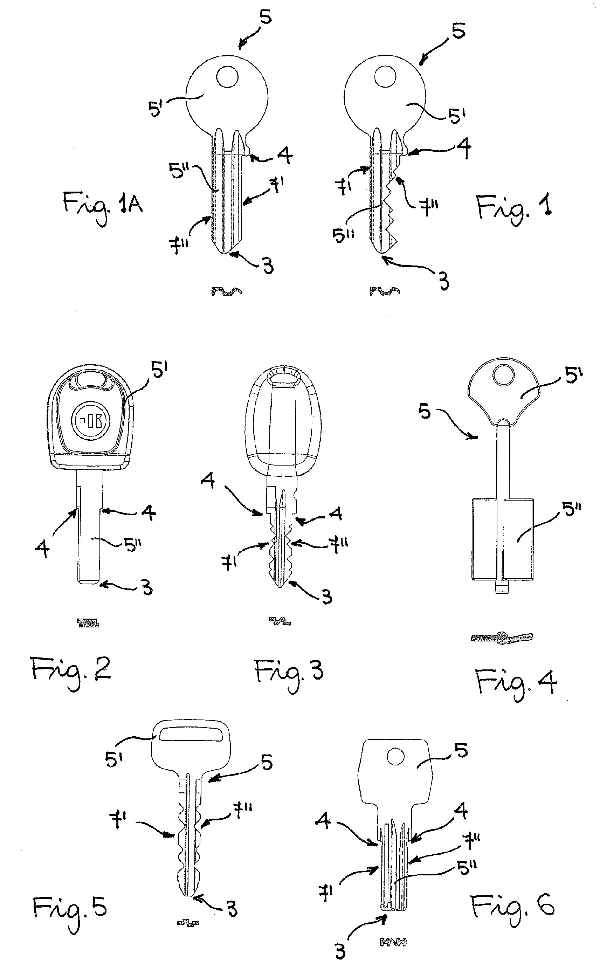

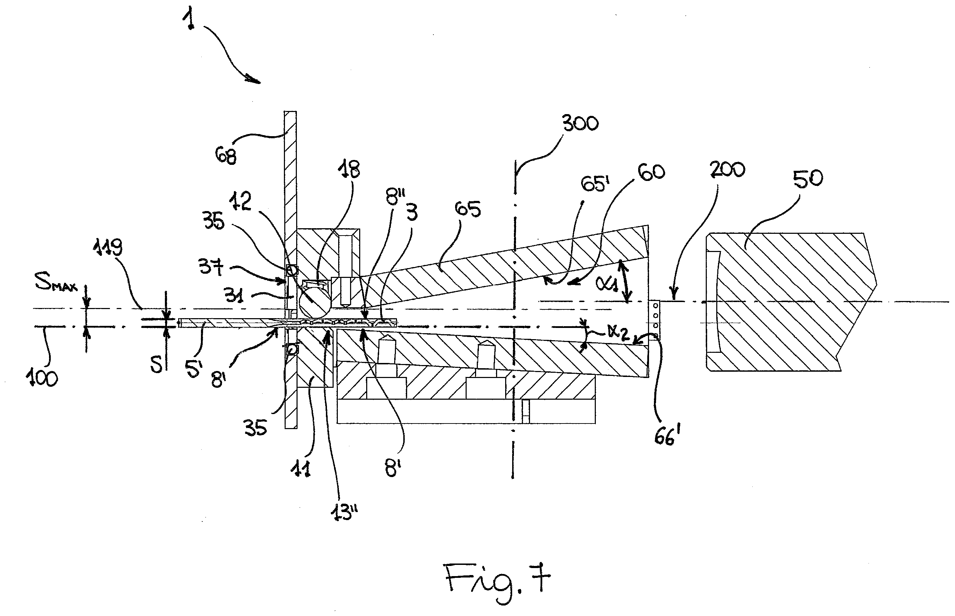

The present invention relates to an apparatus 1 for reading the profile of a key 5, for example for locks or for motor vehicles. With reference to Figure 1, a key 5 generically comprises a head portion 5' (or head 5') and a shank portion 5" (or shank 5") connected to the head portion 5'. The shank 5" is defined by a first face 8' and a second face 8" (indicated in Figure 7), opposite to each other. A first side 7' of the shank 5" and a second side 7", opposite to said first side, is defined between such faces 8', 8". For the purposes of the present invention, the distance between said faces 8', 8" is defined thickness (indicated with S) of the shank 5". The shank 5" further comprises a terminal part 3, this meaning the free end (or tip) of the shank 5", opposite to the head 5'.

The apparatus 1 according to the invention is configured to read the profile and thus identify different types of keys, such as for example the standard type shown in Figure 1, which has one cut side 7' and a stop portion 4 (or even stop 4). Figure 1a instead shows a key blank having a profile (indicated with P1) corresponding to that of the key in Figure 1 (indicated with P). The length of the key in Figure 1A also is compatible with that in Figure 1. Figures 2 and 3 show keys 5 for motor vehicles and the related profiles P of the shank 5". In particular, the key in Figure 3 comprises two cut sides 7', 7", each of which defines a stop portion 4. Figure 4 refers to a key for safes, while Figure 5 is a view of a key without a stop, with two cut sides. Figure 6 instead shows a notched key with two stops 4 defined on the two sides 7', 7"of the shank 5". The keys shown in Figures 1 to 6 are only possible, non-limiting examples of keys, the profile of which may be identified through the apparatus according to the invention.

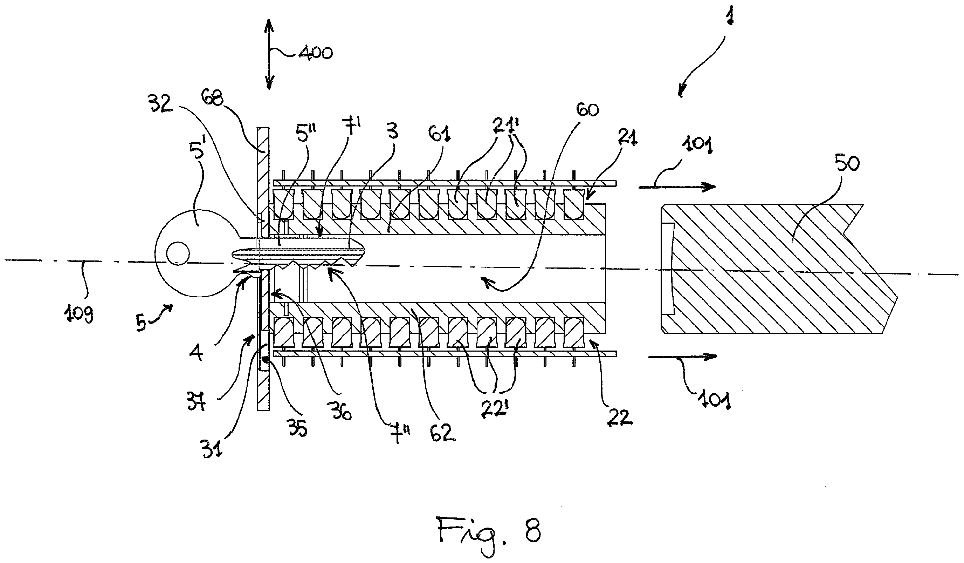

Figures 7 and 8 are diagrammatic views of an apparatus 1 according to the invention, which comprises an optical device configured to capture at least one image of the profile of the shank 5"of said key 5. The optical device defines an optical axis 200 which maintains a fixed position during the normal use of the apparatus 1. The device for capturing images preferably comprises a telecentric lens 50 to which reference will be made in the following description for simplicity only. However, the possibility of using other functionally equivalent optical devices falls within the scope of the present invention.

The apparatus 1 according to the invention comprises a chamber 60 operatively associated with the telecentric lens 50. The chamber 60 comprises an inlet section 9 through which is inserted the key 5, the profile of which is to be read/identified. Such an inlet section 9 is preferably defined through a bottom wall 68 of the chamber itself. Such a bottom wall 68 is preferably defined in a dark, opaque and non-reflective material. The telecentric lens 50 is installed in a position which is substantially in front of the inlet section 9, i.e. opposite to the bottom wall 68. As is shown in Figure 8, the key 5 is inserted into the chamber 60 with the terminal part 3 (or end 3) of the shank 5" facing towards the telecentric lens 50. In this manner, the telecentric lens 50 captures an image comprising at least one front view of the profile of the shank 5"substantially corresponding to the projection of the portion itself onto a reference plane 300 which is substantially perpendicular to the optical axis 200. With reference to Figure 7, the apparatus 1 according to the invention comprises a support device of the key 5, which defines a bearing plane 100 on which the key 5 at least partially rests. Such a bearing plane 100 is substantially parallel to the optical axis 200 of the telecentric lens 50. As is better specified below, the support device preferably comprises first blocking means configured to block the key 5 on the bearing plane 100.

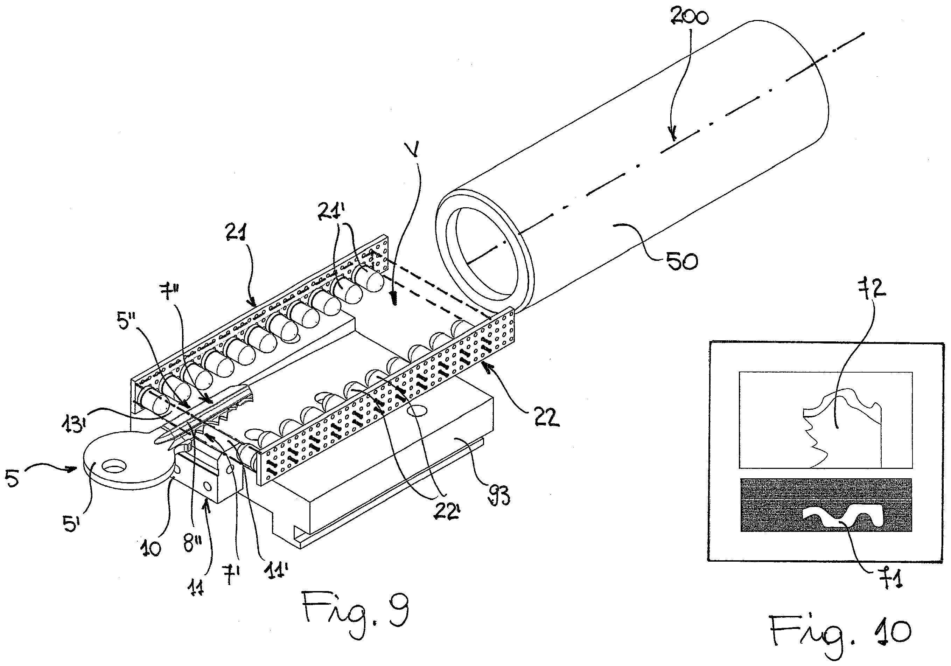

With reference to Figure 8, according to the invention, the apparatus 1 comprises a lighting device operatively associated with the chamber 60 and configured to illuminate, following the activation thereof, at least one terminal part 3 of the portion of the shank 5". Unlike the solution described in WO 2008/071619, the lighting device of the apparatus 1 according to the invention does not create a white background at the head of the key and/or below the bearing plane of the key, but contrarily serves the purpose of illuminating/scattering light onto at least one terminal part 3 of the shank 5". In this manner, the image captured by the telecentric lens 50 comprises a front view of the profile of the portion of the shank 5" which appears light against a dark background. In this regard, Figure 10 shows an example of an image which can be captured by the telecentric lens. Such an image comprises a first front view 71 of the profile of the shank portion and a second view 72 reflected onto an upper wall 65 of the chamber 60, as described below in detail. According to a preferred embodiment shown in the drawings, the lighting device comprises a first source 21 of scattered light and a second source 22 of scattered light placed in fixed position inside the chamber 60 and configured to illuminate two opposite sides 7', 7" of the shank 5". In this manner, direct illumination, and not backlit illumination, of the key shank is obtained. Namely, the first source 21 is configured to illuminate/scatter the light onto a first side 7' of the shank 5", while the second source 22 is configured to illuminate a second side 7", opposite to said first side 7'. For this purpose, the sources 21, 22 are arranged, with respect to the bearing plane 100, so as to face the sides 7', 7" of the shank 5" once the key 5 has been inserted into the chamber 60, as shown in Figure 8. For the purposes of the present invention, the expression "scattered light" is used to indicate the capacity of the two sources 21, 22 to scatter the light radiation in a substantially homogeneous manner according to various directions.

The two sources 21, 22 (or light sources 21, 22) are each arranged along a reference direction 101 which is parallel to the optical axis 200. Preferably, the two light sources 21, 22 extend for the whole length of the chamber 60, which length is assessed according to a direction parallel to the optical axis 200. Again according to a preferred embodiment, the two light sources 21, 22 are also arranged in a specular position with respect to a reference plane 109 (indicated in Figure 8) containing the optical axis 200 and orthogonal to the bearing plane 100 of the key. According to a possible embodiment schematized in the drawings, the two light sources 21, 22 are each defined by a plurality of LEDs 21', 22' aligned according to a row which defines the corresponding reference direction 101 indicated above. Preferably, each light source 21, 22 comprises scattering means of the light operatively associated with the corresponding plurality of LEDs 21', 22' for scattering the light generated by the LEDs themselves. With reference to Figure 8, according to a preferred embodiment, such scattering means comprise, for each source 21, 22, a wall 61, 62 made of translucent material in which the corresponding LEDs 21', 22' are partially inserted.

In an alternative embodiment, the light sources 21, 22 could be defined by one LED or alternatively by a pair of LCD strips arranged on opposite sides of the chamber 60 in symmetrical position with respect to the above-defined reference plane 109. In all cases, according to the invention, the two light sources 21, 22 are configured in the shape of light strips, bands or walls arranged on opposite sides of the chamber 60 so as to illuminate opposite portions of the shank 5".

According to a preferred embodiment, the light sources 21, 22 are arranged above the bearing plane 100 of the key 5 so as to scatter the light generated mainly in a reference volume V defined between the bearing plane 100 itself and a reference plane 119 parallel to the bearing plane 100 (see the diagram in Figure 7). In particular, the reference plane 119 is such that the distance between the two planes involved (100, 119) is less than or equal to the maximum thickness Sₘₐₓ allowed for the shank 5" assessed in reference to the area of the inlet section 9. According to such an arrangement, in the diagram in Figure 8 for example, the LED rows defining the two light sources 21, 22 are installed at a height from 2 to 5 mm from the bearing plane 100, considering a maximum thickness of 6 mm for the shank portion 5". Alternatively, when the light source is defined by a light strip or band, the latter is configured so as to have a height, assessed with respect to the bearing plane 100, at least equal to the above-defined maximum thickness Sₘₐₓ.

In general, through the above-described arrangement, the light generated by the light sources 21, 22 is reflected from the sides 7', 7" of the shank 5". The light which hits the terminal part 3' of the shank portion 5" is reflected towards the telecentric lens 50. As a whole, due to the illumination defined in the chamber 60, the image of the shank 5" captured by the telecentric lens 50 is advantageously "light" against a "dark" background, as shown in Figure 10. It is worth noting that this principle is entirely contrary to that at the basis of the technical solution described in the patent application WO 2008/071619 and allows a more effective identification of the profile of the key 5, as better specified below. The principle of illumination implemented in the apparatus 1 according to the invention is advantageously valid and effective even when tip 3' of the key is rounded or chamfered.

According to the invention, the chamber 60 of the apparatus 1 is configured so as to be "dark" to the reference radiation of the light sources 21, 22, or more generally, of the lighting device employed. In other words, the chamber 60 is configured so as not to have light radiations in the reference band of the light sources/lighting device other than the light sources 21, 22 themselves.

According to a possible preferred embodiment, the two light sources 21, 22 generate infrared light. It has been shown how this solution ensures capturing a sharp image regardless of the color of the shank portion 5" of the key examined. Moreover, the infrared radiation stands out for a slight or even non-existent wavelength in the work environments in which an apparatus for reading the profile of a key is typically used. This means that any radiations which cross the inlet section 9' in fact have no effect on the illumination of the shank 5" and accordingly on the quality of the image captured by the telecentric lens 50. However, the possibility of using other functionally equivalent light sources 21, 22 capable of emitting light having various wavelengths as visible or UV, falls within the scope of the present invention. In the case indicated above in which the two light sources 21, 22 generate infrared light, an IR-pass filter (this term meaning a filter capable of passing only IR radiation) is preferably mounted on the telecentric lens 50.

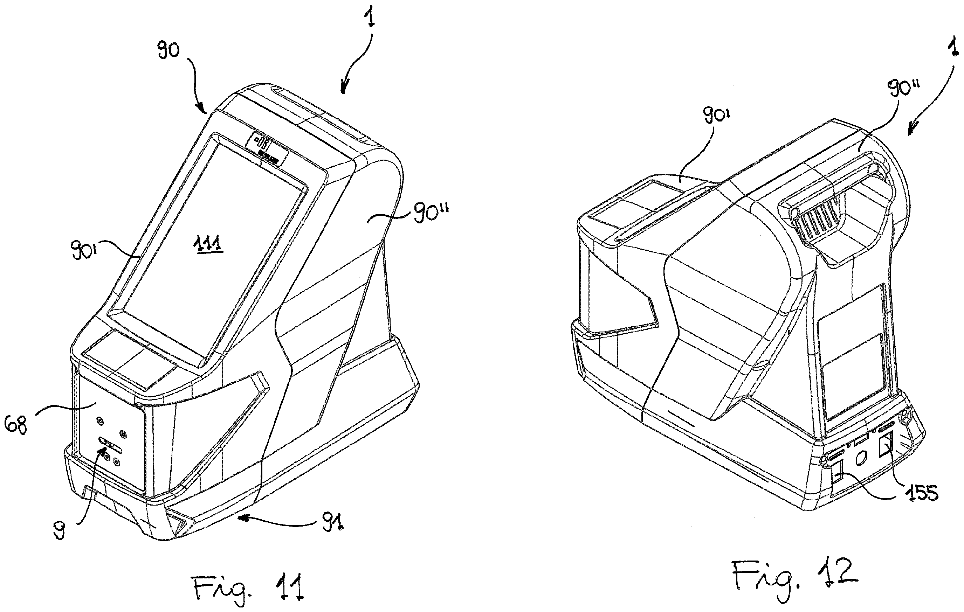

Figures 11 to 14 show a preferred embodiment of the apparatus 1 according to the present invention. The apparatus 1 comprises a casing which defines an internal volume in which a support structure 95 is arranged, configured to support the chamber 60 and the telecentric lens 50. The apparatus 1 further comprises an electronic unit 150, also preferably arranged inside the volume of the casing. Such an electronic unit 150 is operatively connected to the telecentric lens 50 and also preferably to the lighting device (light sources 21, 22) to control the activation/deactivation thereof. The electronic unit 150 and the lighting device are powered by supply means 155 which can be connected to an electric network or alternatively in the form of electric batteries.

With reference to Figure 11, the casing of the apparatus 1 is defined at least by a first portion 90' and by a second portion 90" removably connected to the first portion 90'. In this manner, the apparatus is substantially openable. The first portion 90' defines the bottom wall 68 of the chamber 60 through which is defined the insertion section 9 of the key 5 to be examined. The casing 90 defines a resting base 91 for the apparatus 1.

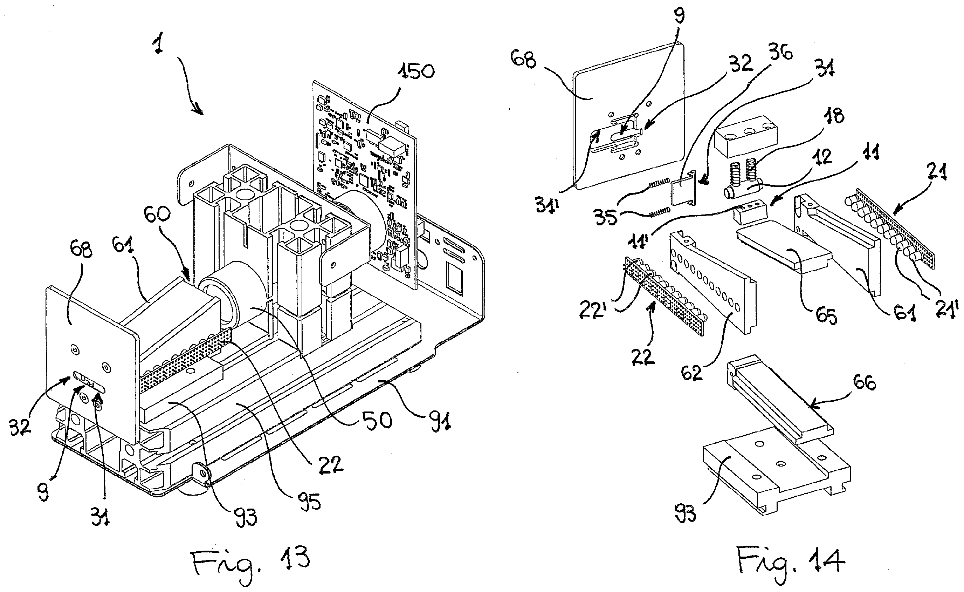

With reference to Figure 13, according to an embodiment, the chamber 60 is mounted on a support 93 removably connected to the support structure 95 placed in the internal volume defined by the casing 90. The removable connection between the portions 90', 90" of the casing and the use of the removable support 65 advantageously facilitate the inspection, maintenance and possibly replacement operations of the chamber 60.

With reference again to Figures 7 and 8, the apparatus 1 according to the invention preferably comprises dimming means of the inlet section 9 operatively arranged close to the section itself. Such means are configured to at least partially prevent the inlet of light radiations from the outside into chamber 60 during the activation of the lighting device, such as for example, reflections which may be formed on the head 5' of the key 5. For the purposes of the present invention, the term *"outside"* means natural or artificial light in any case generated outside the chamber 60 and in the reference band generated by the lighting device. The dimming means substantially limit the generation of stray light inside the chamber 60, the presence of which could cause a reduction in the quality of the image captured by the image capturing device 50.

The apparatus 1 according to the invention preferably comprises positioning means of the key 5 configured to define a physical limitation to the insertion of the key itself into the chamber 60 and/or alignment means for aligning the key during the insertion along a substantially parallel direction to the optical axis 200. The positioning means substantially define a limit insertion position in the key 5, so that the head 5' remains substantially outside the chamber 60. The alignment means instead define a direction of orientation for the key 5. According to a preferred embodiment, the positioning means and the alignment means are defined by a surface on which the stop portion 4 of the key 5 rests in abutment during the insertion of the key. Such an abutment defines a limit position for the insertion of the key and at the same time determines an orientation of the key itself.

With reference to Figures 7, 8 and 14, the dimming means, the positioning means and the alignment means defined above are advantageously integrated in a closure device. Such a device is operatively arranged close to the inlet section 9 and preferably downstream of the section itself with respect to the insertion direction of the key 5. With reference to Figures 7 and 8, the closure device comprises at least one pair of substantially coplanar walls 31, 32, of which at least a first wall 31 is movable along a sliding direction 400 (Figure 8) parallel to the bearing plane 100 and orthogonal to the optical axis 200. Namely, such a first wall 31 is movable in contrast with an elastic element 35 which exerts a force which moves the first wall 31 close to the second wall 32. In an alternative embodiment (not shown), both the walls 31, 32 are movable along said sliding direction 400 in contrast with a corresponding elastic element 35. Each of the walls 31, 32 constantly interacts with a corresponding side 7', 7" of the key 5 during the insertion thereof, due to the elastic elements 35. This results in a closure of the side space between the sides 7', 7"and the sides of the inlet section 9. Such a closure prevents the light from crossing such a side space.

With reference to Figure 14, according to a possible embodiment, the first movable wall 31 slides inside a seat 31' defined by the bottom wall 68 of the chamber 60. Such a first wall 31 moves in contrast with two elastic elements 35 accommodated in the seat 31 itself. The second wall 32 is instead fixed and defined by a portion of the bottom wall 68 itself.

The two walls 31, 32 comprise an inner surface 36 which faces the chamber 60, or more generically faces the telecentric lens 50, and an outer surface 37 opposite to the inner surface 36. According to the invention, the inner surface 36 is not reflective for the purposes of absorbing the light radiation and therefore for preventing the head 5' and the stop 4' of the key 5 from being visible to the telecentric lens 50. In fact, the inner surface 36 is not reflective in order to increase the quality of the image captured by the telecentric lens 50.

The outer surface 37 of at least one of the walls 31, 32 instead forms the abutment for a stop portion 4' of the key 5. Due to such an abutment, the shank 5" is positioned inside the chamber 60, while the head portion 5' advantageously remains outside the chamber itself. This means that the head 5' advantageously remains excluded from the image captured by the telecentric lens 50. When the key has a dual stop 4 (see for example Figures 2, 3 and 6), then the outer surface 37 of both walls 32, 32 defines an abutment for a corresponding stop.

With reference again to Figures 7, 8 and 14, the support device comprises a bearing element 11 having substantially prismatic configuration, provided with a flat surface 11' defining the bearing plane 100. Preferably, the bearing element 11 is placed downstream of the above-described closure device, again with respect to the insertion direction of the key 5. In this manner, only the shank portion 5" or a first segment thereof rests on the flat surface 11'. In particular, the bearing element is placed in position adjacent to the walls 31, 32 of the closure device. However, the possibility of placing the support device upstream of the closure device falls within the scope of the present invention.

Preferably, the flat surface 1 1' of the bearing element 11 has an axial extension, i.e. assessed along a direction parallel to the optical axis 200, in the range from 5 to 15 mm. In this manner, at the end of the insertion of the key 5, at least one segment of the shank 5" advantageously will *"overhangingly"* emerge inside the chamber 60. It has been shown that such an *"overhanging"arrangement* improves the definition of the image captured by the telecentric lens 50.

In the embodiment shown in Figures 7, 8 and 14, the support device comprises a mechanical blocking element 12 which is movable in contrast with an elastic element 18 along a substantially orthogonal direction to the flat surface 11' of the bearing element 11. The blocking element 12 exerts a constant pressure on the key 5 through the elastic element 18, preferably on the shank portion 5" which keeps the same against the flat surface 11'. Preferably, the blocking element 12 is defined by a cylindrical body on which the elastic element 18 acts, for example in the form of a spring.

In an alternative embodiment, the blocking element 12 could have a similar configuration to that of the bearing element 11. Further constructional variants of the blocking element however are to be considered as falling within the scope of the present invention.

According to a further aspect, at least the surfaces of the bearing element 11 and of the blocking element 12 facing the telecentric lens 50 are made of a non-reflective material in order to absorb the light scattered by the light sources 21, 22 to the greatest extent possible, i.e. in order to increase the quality of the image captured by the telecentric lens 50.

Preferably, the bearing element 11 comprises a pair of non-reflective chamfer surfaces 13', 13" (Figure 7 and Figure 9) defined at the flat surface 11'. A first chamfer surface 13', facing the inlet section 9, serves the function of facilitating the insertion of the key 5, thus preventing the abutment of the key against the bearing element 11. The other chamfer surface 13", facing towards the telecentric lens 50, instead serves the purpose of avoiding the reflection of the light towards the telecentric lens 50 itself, at the height of face 8'.

It is worth noting that the same effects obtained by the chamfer surfaces 13', 13" in the blocking element 12 are achieved due to the cylindrical shape assigned to the body of the element itself. The second chamfer surface 13" and the cylindrical shape of the blocking element 12 as a whole generally define shielding means of the support device 10 configured to prevent the reflection of the light towards the telecentric lens 50 close to the surfaces 8', 8" of the shank 5" in contact with the device 10 itself.

As shown in Figure 7, the bearing element 11 defines the bearing plane 100 by being placed in a position below the plane itself. The blocking element 12 instead is placed in the opposite position, i.e. above the plane itself. However, the position of the two elements (11, 12) could be inverted.

It is worth noting that in light of the principle of illumination implemented in the apparatus 1 according to the invention, the elements of the support device may advantageously be made of metal material to the benefit of increased resistance against wear, and decreased costs.

With reference to Figures 8, 13 and 14, the chamber 60 comprises a first side wall 61 and a second side wall 62, opposite to the first wall 61. With reference to Figure 8, a first row of LEDs 21' (first light source 21) is operatively connected to the first wall 61, while a second row of LEDs 22' (second light source 22) is connected to the second wall 62. In particular, the LEDs are at least partially inserted into the structure of the corresponding walls 61, 62. Preferably, the two side walls 61, 62 extend over planes parallel to the optical axis 200 and orthogonal to the positioning plane 100. Such walls 61, 62 are preferably made of translucent material, such as for example Plexiglas, to scatter the light generated by the LEDs towards the shank 5" and also to an upper wall 65 of the chamber 60 defined below.

With reference again to Figures 8, 13 and 14, the chamber 60 preferably also comprises a first transverse wall 65 (or upper wall 65) which extends between the side walls 61, 62 above the bearing plane 100. Preferably, the chamber 60 also comprises a second transverse wall 66 (or lower wall 66) which extends between the side walls 61, 62 in a position below the bearing plane 100. Namely, such a lower wall 66 extends from a minimum distance from the bearing plane 100 to avoid collisions with the key 5 during the insertion of the key into the chamber 60. According to the invention, the inner surface 65' of one of the two walls mentioned (preferably the upper wall 65) is made of a reflective translucent material, while the inner surface 66' of the other wall (preferably the lower wall 66) is made of a non-reflective translucent material. In particular, the use of a translucent material for both the inner surfaces 65', 66' mentioned advantageously allows the terminal part 3 of the shank 5" to be effectively illuminated also when a key has a rounded/chamfered end/tip. The use of a reflective material for at least one of the two inner surfaces instead allows a reflected view of the shank 5" to be obtained on such a surface according to the above description.

With reference to the diagram in Figure 7, according to a further aspect, the inner surface 65' of the upper wall 65 is preferably inclined by an angle α1 with respect to the bearing plane 100. Such a solution advantageously allows the telecentric lens 50 to capture an image which comprises a further view (reference 72 in Figure 10) of the shank 5" reflected onto the inner surface 65' of the upper wall 65. The length of the shank 5", and therefore a further piece of information related to the morphology of the shank 5" being examined, and in particular of the terminal portion 3', may advantageously be estimated from such a further view. The surface 65 advantageously substantially allows an image to be captured which contains two points of view (view of the profile and reflected view) of the shank portion 5". According to an alternative embodiment, the inner surface 66' of the lower wall 66 is also inclined with respect to the bearing plane 100, in an opposite direction to the inner wall 65' of the upper wall 65 and namely, so that the two surfaces 65', 66' extend over planes which diverge in the direction of the telecentric lens 50. The surface 66' is inclined, with respect to the bearing plane 100, by a second angle α₂ with respect to the bearing plane 100. Due to such an inclination, the lower wall 66 is not an impediment to the insertion of the key 5 through the inlet section 9. At the same time, such an inclination avoids the lower wall 66 itself from being scratched by the shank portion 5". Moreover, the inclination of the inner surface of the lower wall 66 also allows the downwards deposition of possible dirt.

Other possible embodiments of the upper wall 65 and/or of the lower wall 66 are in any case to be considered as falling within the scope of the present invention. For example, the lower wall may extend over a plane spaced apart from and parallel to the bearing plane 100 (angle α₂ null). Likewise, the upper wall 65 could also extend over a plane spaced apart from and parallel to the bearing plane 100 (angle α₁ null). In this case, the telecentric lens 50 could capture an image in fact comprising only a front view of the profile of the shank portion 5".

The operating principle of the apparatus shown in Figures 7 to 14 is described below, assuming to examine a key with a single cut side and provided with a stop, like that shown in Figure 1. It is understood that the apparatus 1 itself may in any case be used to identify other types of keys, such as for example those shown in Figures 2 to 6. The switching on of the apparatus 1 causes the activation of the light sources 21, 22 and therefore the illumination of the chamber 60. The key 5 to be examined is inserted into the inlet section 9 up to reaching an operating position established by the abutment of the stop 4' of the key 5 against at least one of the vertical walls 31, 32 of the closure device. In such a position, the head portion 5' of the key 5 remains outside the chamber 60. The shank portion 5" instead emerges *"overhangingly"* inside the chamber itself due to the configuration of the support device. In greater detail, only a first segment of limited extension of the shank 5" rests against the flat surface 11' of the support element 11. The blocking element 12 of the support device acts on such a first segment, which element 12 stably blocks the key 5 during the reading of the profile.

The shank portion 5" is illuminated by the two light sources 21, 22 arranged on opposite sides of the chamber 60 according to the principles indicated above. The telecentric lens 50 captures at least one image comprising a front view of the profile of the key 5 and a further view of the shank portion reflected onto the inner surface 65' of the upper wall 65 of the chamber 60. Such an image advantageously is displayed on a screen 111 or display (Figure 10) of the apparatus 1 (Figure 11). It is worth noting that such a display allows an operator to intervene on the head portion 5' of the key to correct the orientation of the shank 5" inside the chamber 60. This need could occur for example, in the case of a key without a stop (for example, like those shown in Figures 4 and 5), for which the abutment, and therefore the alignment allowed by the walls 31, 32 of the closure device, may not be taken advantage of.

As indicated above, due to the configuration of the chamber 60 and due to the arrangement of the light sources 21, 22 and the reflection of the light onto the key 5, a direct illumination, and not a backlit illumination, is obtained whereby the front view of the profile of the shank 5" in the image captured by the telecentric lens 50 always appears light against a dark background. Due to the position of the light sources which partially or totally illuminate the sides 7', 7" of the shank 5, the reflection of the light towards the telecentric lens may be taken advantage of, a reflection which occurs at the inclined surfaces of shank 5.

The processing unit 150 of the apparatus 1 processes the image captured by the telecentric lens 50, thus obtaining a reference profile of the shank 50". Such a reference profile is compared, through a comparison algorithm, with a series of profiles saved in a database, to each of which an identification code is assigned. Following the occurrence of a correspondence between the reference profile and one of those saved in the database, the processing unit 150 displays the identification code assigned to the profile saved, on the display 111. In this manner, the operator may track down the key blank (see Figure 1A) by taking advantage of the identification code assigned to the profile. The operator therefore may proceed with duplicating the key.

As indicated above, the image of the telecentric lens 50 also comprises a view of the shank 5" reflected onto the inner surface 65' of the upper wall 65 of the chamber 60. The processing unit 150 processes this information by advantageously estimating the length of the shank 5" according to the geometrical features of the chamber 60 (extension along an axis parallel to the optical axis, inclination of the angle of the inner surface 65', etc.) and according to the position of the stop 4 of the key 5 known due to the abutment against the walls 31, 32 of the closure device. The technical solutions implemented for the apparatus according to the present invention allow the preset task and objects to be completely achieved. In particular, the apparatus is versatile because it may identify the profile of various types of keys. The use of a lighting device configured to scatter the light over the key shank allows a high quality image to be obtained without affecting the complexity of the other parts of the apparatus.

## Claims

1. An apparatus (1) for reading the profile of a shank portion (5") of a key (5) wherein said shank portion (5") comprises at least one terminal part (3), a first face (8'), and a second face (8") opposite to said first face (8'), said apparatus
(1) being **characterized in that** it comprises:
- a chamber (60) provided with an inlet section (9) for the insertion of at least one segment of said shank portion (5");
- an optical device (50) operatively associated with said chamber (60), said optical device (50) defining an optical axis (200) and being configured to capture an image comprising at least one view of said profile;
- a support device (11,12) which defines a bearing plane (100) for at least one segment of said key (5), said optical axis (200) being parallel to said bearing plane (100);
- a lighting device (21,22) operatively associated with said chamber (60) and configured to illuminate said at least one terminal part of said shank portion (5"), wherein said lighting device (21,22) comprises:
- a first source (21) of scattered light operatively associated with said chamber (60) and configured to illuminate a first side (7') of said shank portion (5") comprised between said first face (8'), which, when the apparatus is being used, is resting on said bearing plane (100), and said second face (8");
- a second source (22) of scattered light operatively associated with said chamber (60) and configured to illuminate a second side (7") of said shank portion (5") opposite to said first side (7');
and wherein said first and second sources (21, 22) are arranged, with respect to the bearing plane (100), so as to face the first and second sides (7', 7"), respectively, of the shank portion (5") and extend mainly along a reference direction (101) parallel to said optical axis (200).

2. An apparatus (1) according to claim 1, wherein said optical device (50) is a telecentric lens.

3. An apparatus (1) according to any one of claims 1 or 2, wherein said apparatus (1) comprises dimming means of said inlet section (9) configured to limit, at least during the activation of said light sources (21,22), the entry of light in said chamber (60).

4. An apparatus (1) according to any one of claims 1 to 3, wherein said apparatus (1) comprises positioning means of said key (5) configured to define a limit position of insertion of said key (5) in said chamber (60) and/or alignment means of said key (5) which define an orientation direction of said key (5).

5. An apparatus (1) according to any one of claims 1 to 4, wherein said apparatus (1) comprises a closure device comprising a pair of walls (31,32) of which at least one wall is movable along a direction (300) parallel to the bearing plane (100) and orthogonal to the optical axis (200), said at least one of said walls (31,32) being subjected to the thrust of an elastic element (35) which acts so as to draw up the walls themselves, said walls (31,32) being configured to interact with a corresponding side (7',7") of said key during the insertion thereof.

6. An apparatus (1) according to any one of claims 1 to 5, wherein said support device (1) comprises:
- a bearing element (11) having a flat surface (11') which defines said bearing plane (100);
- a blocking element (12) which is opposite to said bearing element (11) with respect to said bearing plane (100), said blocking element (12) blocking said key (5) against said flat surface (11').

7. An apparatus (1) according to any one of claims 2 to 6, wherein said chamber (60) comprises a first side wall (61) to which said first source (21) of scattered light is connected and a second side wall (62) to which said second source (22) of scattered light is connected, said side walls (61,62) being configured so that at least the corresponding inner surface extends on a plane parallel to the optical axis (200) and orthogonal to the bearing plane (100).

8. An apparatus (1) according to any one of claims 1 to 7, wherein said chamber comprises a first transverse wall (65) which extends in a position above the bearing plane (100) and a second transverse wall (66) which extends in a position below said bearing plane (100), one between said first transverse wall (65) and said second transverse wall (66) being made of reflective material, the other being made of non-reflective material.

9. An apparatus (1) according to claim 8, wherein said lower wall (66) and said upper wall (65) are made of a translucent material.

10. An apparatus (1) according to claim 8 or 9, wherein said transverse walls (65,66) extend between said side walls (61,62).

11. An apparatus (1) according to any one of claims 8 to 10, wherein at least one inner surface (65') of said first transverse wall (65) is inclined at a first angle (α1) with respect to the bearing plane (100), said inner surface (65') extending on a plane which diverges from said bearing plane (100) in the direction of said optical device (50).

12. An apparatus (1) according to one of claims 8 to 11, wherein at least one inner surface (66') of said second transverse wall (66) is inclined at an angle (α2) with respect to the bearing plane (100), said inner surface (66') extending on a plane which diverges from said bearing plane (100) in the direction of said optical device (50).

13. An apparatus (1) according to any one of claims 1 to 12, wherein said apparatus (1) comprises an openable casing (90) that defines an internal volume in which a support structure (95) is placed, said chamber (60) being installed on a support (93) connected in removable manner to said support structure (95).

## Patentansprüche

1. Vorrichtung (1) zum Lesen des Profils eines Schaftteils (5") eines Schlüssels (5), wobei der Schaftteil (5") zumindest ein Endstück (3), eine erste Seite (8') und eine zweite Seite (8") gegenüberliegend der ersten Seite (8') aufweist, wobei die Vorrichtung (1) **dadurch gekennzeichnet ist, dass** sie aufweist:
- eine Kammer (60), die mit einem Einlassbereich (9) versehen ist, zum Einführen von zumindest einem Segment des Schaftteils (5");
- eine optische Vorrichtung (50), die operativ mit der Kammer (60) verbunden ist, wobei die optische Vorrichtung (50) eine optische Achse (200) definiert und derart ausgestaltet ist, dass sie ein Bild aufnimmt, das zumindest eine Ansicht des Profils aufweist;
- eine Trägervorrichtung (11, 12), die eine Lagerungsebene (100) für zumindest ein Segment des Schlüssels (5) definiert, wobei die optische Achse (200) parallel zu der Lagerungsebene (100) ist;
- eine Beleuchtungsvorrichtung (21, 22), die operativ mit der Kammer (60) verbunden und derart ausgestaltet ist, dass sie das zumindest eine Endstück des Schaftteils (5") beleuchtet, wobei die Beleuchtungsvorrichtung (21, 22) aufweist:
- eine erste Streulichtquelle (21), die operativ mit der Kammer (60) verbunden und derart ausgestaltet ist, dass sie eine erste Seite (7') des Schaftteils (5") beleuchten kann, die zwischen der ersten Seite (8'), die bei Verwendung der Vorrichtung auf der Lagerungsebene (100) ruht, und der zweiten Seite (8") eingeschlossen ist;
- eine zweite Streulichtquelle (22), die operativ mit der Kammer (60) verbunden und derart ausgestaltet ist, dass sie eine zweite Seite (7") des Schaftteils (5"), gegenüber der ersten Seite (7'), beleuchtet;
wobei die erste und die zweite Quelle (21, 22) bezüglich der Lagerungsebene (100) so angeordnet sind, dass sie zur ersten bzw. zweiten Seite (7', 7") des Schaftteils (5") zeigen und sich im Wesentlichen entlang einer Referenzrichtung (101) parallel zu der optischen Achse (200) erstrecken.

2. Vorrichtung (1) gemäß Anspruch 1, wobei die optische Vorrichtung (50) ein telezentrisches Objektiv ist.

3. Vorrichtung (1) gemäß Anspruch 1 oder 2, wobei die Vorrichtung (1) Mittel zur Abdunklung des Einlassbereichs (9) aufweist, die derart ausgestaltet sind, dass sie, zumindest während der Aktivierung der Lichtquellen (21, 22), den Lichteinlass in die Kammer (60) begrenzen.

4. Vorrichtung (1) gemäß einem der Ansprüche 1 bis 3, wobei die Vorrichtung (1) Mittel zur Positionierung des Schlüssels (5) aufweist, die derart ausgestaltet sind, dass sie eine Endposition für das Einführen des Schlüssels (5) in die Kammer (60) definieren und / oder Mittel zur Ausrichtung des Schlüssels (5), die eine Orientierungsrichtung des Schlüssels (5) definieren.

5. Vorrichtung (1) gemäß einem der Ansprüche 1 bis 4, wobei die Vorrichtung (1) eine Schließvorrichtung mit einem Paar Wänden (31, 32) aufweist, von denen zumindest eine Wand entlang einer Richtung (300) parallel zu der Lagerungsebene (100) und senkrecht zur optischen Achse (200) beweglich ist und das Paar Wände (31, 32) einer Druckkraft eines elastischen Elements (35) ausgesetzt sind, die die Wände aufrichtet, wobei die Wände (31, 32) derart ausgestaltet sind, dass sie während des Einführens des Schlüssels mit dessen jeweils zugehörigen Seiten (7', 7") interagieren.

6. Vorrichtung (1) gemäß einem der Ansprüche 1 bis 5, wobei die Trägervorrichtung (1) aufweist:
- ein Trägerelement (11) mit einer flachen Oberfläche (11'), die die Lagerungsebene (100) definiert;
- ein Sperrelement (12), das bezüglich der Lagerungsebene (100) gegenüber dem Trägerelement (11) angeordnet ist, und das den Schlüssel (5) gegen die flache Oberfläche (11') drückt.

7. Vorrichtung (1) gemäß einem der Ansprüche 2 bis 6, wobei die Kammer (60) eine erste Seitenwand (61) aufweist, an der die erste Streulichtquelle (21) angebracht ist, und eine zweite Seitenwand (62), an der die zweite Streulichtquelle (22) angebracht ist, wobei die Seitenwände (61, 62) derart ausgestaltet sind, dass sich zumindest die zugehörige innere Fläche entlang einer Ebene parallel zur optischen Achse (200) und senkrecht zur Lagerungsebene (100) erstreckt.

8. Vorrichtung (1) gemäß einem der Ansprüche 1 bis 7, wobei die Kammer eine erste Querwand (65), die sich überhalb der Lagerungsebene (100) erstreckt, und eine zweite Querwand (66), die sich unterhalb der Lagerungsebene (100) erstreckt, aufweist, wobei eine zwischen der ersten Querwand (65) und der zweiten Querwand (66) aus reflektierendem Material, die andere aus nicht-reflektierendem Material hergestellt ist.

9. Vorrichtung (1) gemäß Anspruch 8, wobei die untere Wand (66) und die obere Wand (65) aus lichtdurchlässigem Material sind.

10. Vorrichtung (1) gemäß Anspruch 8 oder 9, wobei die Querwände (65,66) sich zwischen den Seitenwänden (61,62) erstrecken.

11. Vorrichtung (1) nach einem der Ansprüche 8 bis 10, wobei zumindest eine innere Oberfläche (65') der ersten Querwand (65) bezüglich der Lagerungsebene (100) in einem ersten Winkel (α 1) geneigt ist, und die innere Oberfläche (65') sich auf einer Ebene erstreckt, die von der Lagerungsebene (100) in Richtung der optischen Vorrichtung (50) divergiert.

12. Vorrichtung (1) nach einem der Ansprüche 8 bis 11, wobei die zumindest eine innere Oberfläche (66') der zweiten Querwand (66) in einem Winkel (α2) bezüglich der Lagerungsebene (100) geneigt ist, und die innere Oberfläche (66') sich auf einer Ebene erstreckt, die von der Lagerungsebene (100) in Richtung der optischen Vorrichtung (50) divergiert.

13. Vorrichtung (1) nach einem der Ansprüche 1 bis 12, wobei die Vorrichtung (1) ein Gehäuse (90) aufweist, das geöffnet werden kann, und das ein internes Volumen definiert, in welchem eine Stützstruktur (95) angeordnet ist, und die Kammer (60) auf einer Abstützung (93) installiert ist, die in einer abnehmbaren Weise mit der Stützstruktur (95) verbunden ist.

## Revendications

1. Appareil (1) pour lire le profil d'une partie tige (5'') d'une clé (5) dans lequel ladite partie tige (5'') comprend au moins une partie terminale (3), une première face (8'), et une seconde face (8'') opposée à ladite première face (8'),
ledit appareil (1) étant **caractérisé en ce qu'**il comprend :
- une chambre (60) pourvue d'une section entrée (9) pour l'insertion d'au moins un segment de ladite partie tige (5") ;
- un dispositif optique (50) associé de manière fonctionnelle à ladite chambre (60), ledit dispositif optique (50) définissant un axe optique (200) et étant configuré pour capturer une image comprenant au moins une vue dudit profil ;
- un dispositif de support (11, 12) qui définit un plan d'appui (100) pour au moins un segment de ladite clé (5), ledit axe optique (200) étant parallèle audit plan d'appui (100) ;
- un dispositif d'éclairage (21, 22) associé de manière fonctionnelle à ladite chambre (60) et configuré pour éclairer ladite au moins une partie terminale de ladite partie tige (5"),
dans lequel ledit dispositif d'éclairage (21, 22) comprend :
- une première source (21) de lumière diffusée associée de manière fonctionnelle à ladite chambre (60) et configurée pour éclairer un premier côté (7') de ladite partie tige (5'') comprise entre ladite première face (8'), qui, quand l'appareil est utilisé, repose sur ledit plan d'appui (100), et ladite seconde face (8") ;
- une seconde source (22) de lumière diffusée associée de manière fonctionnelle à ladite chambre (60) et configurée pour éclairer un second côté (7'') de ladite partie tige (5'') opposé audit premier côté (7') ;
et dans lequel lesdites première et seconde sources (21, 22) sont agencées, par rapport au plan d'appui (100), afin de faire face aux premier et second côtés (7', 7''), respectivement, de la partie tige (5'') et s'étendent principalement le long d'une direction de référence (101) parallèle audit axe optique (200).

2. Appareil (1) selon la revendication 1, dans lequel ledit dispositif optique (50) est une lentille télécentrique.

3. Appareil (1) selon l'une quelconque des revendications 1 ou 2, dans lequel ledit appareil (1) comprend un moyen de gradation de ladite section entrée (9) configuré pour limiter, au moins pendant l'activation desdites sources de lumière (21, 22), l'entrée de lumière dans ladite chambre (60).

4. Appareil (1) selon l'une quelconque des revendications 1 à 3, dans lequel ledit appareil (1) comprend un moyen de positionnement de ladite clé (5) configuré pour définir une position limite d'insertion de ladite clé (5) dans ladite chambre (60) et/ou un moyen d'alignement de ladite clé (5) qui définit une direction d'orientation de ladite clé (5).

5. Appareil (1) selon l'une quelconque des revendications 1 à 4, dans lequel ledit appareil (1) comprend un dispositif de fermeture comprenant une paire de parois (31, 32) dont au moins une paroi est mobile le long d'une direction (300) parallèle au plan d'appui (100) et orthogonale à l'axe optique (200), ladite au moins une desdites parois (31, 32) étant soumise à la poussée d'un élément élastique (35) qui agit afin de rapprocher les parois elles-mêmes, lesdites parois (31, 32) étant configurées pour interagir avec un côté (7', 7'') correspondant de ladite clé lors de l'insertion de celle-ci.

6. Appareil (1) selon l'une quelconque des revendications 1 à 5, dans lequel ledit dispositif de support (1) comprend :
- un élément d'appui (11) ayant une surface plate (11') qui définit ledit plan d'appui (100) ;
- un élément de blocage (12) qui est opposé audit élément d'appui (11) par rapport audit plan d'appui (100), ledit élément de blocage (12) bloquant ladite clé (5) contre ladite surface plate (11').

7. Appareil (1) selon l'une quelconque des revendications 2 à 6, dans lequel ladite chambre (60) comprend une première paroi latérale (61) à laquelle ladite première source (21) de lumière diffusée est connectée et une seconde paroi latérale (62) à laquelle ladite seconde source (22) de lumière diffusée est connectée, lesdites parois latérales (61, 62) étant configurées pour qu'au moins la surface interne correspondante s'étende sur un plan parallèle à l'axe optique (200) et orthogonal au plan d'appui (100).

8. Appareil (1) selon l'une quelconque des revendications 1 à 7, dans lequel ladite chambre comprend une première paroi transversale (65) qui s'étend dans une position au-dessus du plan d'appui (100) et une seconde paroi transversale (66) qui s'étend dans une position en dessous dudit plan d'appui (100), une entre ladite première paroi transversale (65) et ladite seconde paroi transversale (66) étant faite d'un matériau réfléchissant, l'autre étant faite d'un matériau non réfléchissant.

9. Appareil (1) selon la revendication 8, dans lequel ladite paroi inférieure (66) et ladite paroi supérieure (65) sont faites d'un matériau translucide.

10. Appareil (1) selon la revendication 8 ou 9, dans lequel lesdites parois transversales (65, 66) s'étendent entre lesdites parois latérales (61, 62).

11. Appareil (1) selon l'une quelconque des revendications 8 à 10, dans lequel au moins une surface interne (65') de ladite première paroi transversale (65) est inclinée à un premier angle (α1) par rapport au plan d'appui (100), ladite surface interne (65') s'étendant sur un plan qui diverge par rapport audit plan d'appui (100) dans la direction dudit dispositif optique (50).

12. Appareil (1) selon l'une quelconque des revendications 8 à 11, dans lequel au moins une surface interne (66') de ladite seconde paroi transversale (66) est inclinée à un angle (α2) par rapport au plan d'appui (100), ladite surface interne (66') s'étendant sur un plan qui diverge par rapport audit plan d'appui (100) dans la direction dudit dispositif optique (50).

13. Appareil (1) selon l'une quelconque des revendications 1 à 12, dans lequel ledit appareil (1) comprend un boîtier ouvrable (90) qui définit un volume interne dans lequel une structure de support (95) est placée, ladite chambre (60) étant installée sur un support (93) connecté de manière amovible à ladite structure de support (95).
